# EUROPEAN PATENT SPECIFICATION

(11) **EP 0 398 477 B1**
(45) Date of publication and mention of the grant of the patent: **18.09.1996**
(21) Application number: 90303176.3
(22) Date of filing: 26.03.1990
(51) Int. Cl.: G06F 17/21, G06F 17/30

(54) **Text processing system using text cells**
Textverarbeitungssystem mit Textzellen
Système de traitement de textes avec des cellules de texte

(30) Priority: 21.04.1989 US 341186
(43) Date of publication of application: 22.11.1990
(73) Proprietor: International Business Machines Corporation, Armonk, N.Y. 10504 (US)
(72) Inventor: Pascoe, Robert August, Grapevine Texas 76051 (US)
(74) Representative: Burt, Roger James, Dr.

(56) References cited:
- EP-A- 0 117 406
- IBM TECHNICAL DISCLOSURE BULLETIN, vol. 26, no. 8, January 1984, pages 4349-4354, New York, US; G.M. BARTLETT et al.: "Table processing"
- IBM TECHNICAL DISCLOSURE BULLETIN, vol. 27, no. 10A, March 1985, page 5474, New York, US; "Assigning properties to object sets"
- IBM TECHNICAL DISCLOSURE BULLETIN, vol. 28, no. 2, July 1985, page 810, New York, US; "Method to provide variable-height rows in tables"

## Description

This invention relates to a system and technique in which text is formatted within individual cells in a data processing system.

With conventional word processing systems, the formatting of text into a table has always been an arduous task. Typically an operator will have to convert the horizontal dimensions of the table into tab positions, and then key text one horizontal print line at a time, placing the data from each table entry at the associated tab stops.

From this it is noted that the operator does not have the aid of the word processing system in forming the line endings within a table entry, as there is only one margin setting associated with the horizontal print line. Therefore, rather than "power type" the contents of each table entry, the operator must watch the cursor position of each character and determine visually when the limits of the table are reached, then tab to the beginning of the next table entry position and begin typing the contents of that table position, and so on, for each horizontal print line.

The operator must reestablish the location in the input manuscript each time a table position is changed. The operator must also manually skip space as required in the table entries by applying the correct tab sequences. It is also the operator's duty to manually align the tables' positions as required. For example, it may be desired that the bottoms of all tables be aligned to the bottom of the table containing the most text.

If the table has highlighting or outline requirements, the complexity is compounded when using prior art word processing for presentation of tabular text. Again, this complexity is inherent with techniques that deal with entire, horizontal lines of text, with one left margin and one right margin. If, for example, it is desired to underline some text within a columnar table, the operator would have to turn underlining on and off on each line of the table. Rather than go through such a tedious procedure, the operator typically removes the final copy of the table, takes out a marker and/or straightedge, and manually underlines the appropriate text within the table.

A further difficulty in the above example is that the function of Spell Check with hyphenation cannot be accomplished since words associated with each other n the text are not contiguous on a horizontal print line.

More sophisticated word processing programs, such as the IBM DisplayWrite 3 word processing program provide keying aids for the generation of tables, but this product only stores the formatted results of the table generation process and not the formatting parameters associated with the generation of the table. Therefore, the intent of the generating operator cannot be interchanged, and as a result, the revision of a table so generated is much more difficult than its original generation.

An article entitled "Table Processing" by G M Bartlett (IBM Technical Disclosure Bulletin, Vol 26, No. 8, January 1984, pp4349-4354) shows one way for a word processing system to be able to generate and revise tables in an improved manner, such that text associated with each table is treated as a coherent entity and not as a portion of a horizontal line containing other text not associated therewith. In the Bartlett article, a method of defining table layouts by means of a pictorial notation is described. Fields of the table into which text is to be entered are defined by a numeric matrix in which all row and column intersections within the same field are identified by the same number.

However, there is still a need to enable a word processing operator to generate tabular data in a straightforward and simple manner, one cell or field at a time by interspersing typed commands in the data stream before each cell.

The present invention provides a method of automatically for matting text for display in a data processing system comprising the steps of:
in response to user commands dividing a display area into a group of substantially rectangular text cells arranged in a plurality of horizontally extending chains vertically offset from each other so that, as far as possible, each text cell in the group butts against its neighbouring cells;
and independently automatically formatting respective portions of text from a user generated data stream into said text cells; characterized by the further automatic steps of:-
   building control blocks for each text cell in response to user-entered control commands in said data stream, the control blocks including boundary defining attributes for their respective cells; determining a horizontal and vertical position for each cell, the positions of successive cells in a chain being calculated with reference to the boundary attributes of neighbouring cells;
   determining, for cells having a variable height attribute, the required height of each such cell in relation to the text to be formatted and adjusting said height attribute to accommodate said text; and
   adjusting, if necessary, the height attributes of other variable height cells in the same chain to be equal to said adjusted height attribute.

The invention also provides a data processing system comprising means for performing the above method of formatting text.

Accordingly, a Text Cell is provided which is a parallelogram defining an area into which text data can be formatted for presentation. The Text Cell defines the boundaries for the text presentation. Well known and understood text formatting concepts such as margins, tabs, line density, etc., can be applied to the text as it is formatted into the Text Cell.

The definition of Text Cells, including the Text Cell Attributes, the location and text content of the cells, the clustering of the cells into sets and the chaining of cells is controlled by two data stream commands. These are the Define Text Cell, and Open Text Cell commands.

The Define Text Cell command specifies the parameters associated with a Text Cell Chain. The Define Text Cell is a declarative which specifies a set of global parameters to be applied to each Text Cell to be presented following the issuance of this command. These parameters may be overridden for each individual Text Cell, but once that individual Text Cell is presented, all parameters revert back to the values specified in this command.

The second command, Open Text Cell, causes an individual Text Cell to be established. That is, the area associated with the Text Cell is opened, the presentation parameters for the cell are set, and the text information which follows this current Open Text Cell, but precedes a subsequent Open Text Cell, is processed into this area. Each Text Cell within a Text Cell Chain begins with an Open Text Cell.

The Open Text Cell contains a 'Chain ID' that defines the Text Cell chain within a Text Cell Group to which the current cell belongs.

Each Open Text Cell contains a group of optional parameters. These parameters may be used to override the global Text Cell parameters specified in the Define Text Cell command for the processing of this specific Text Cell. If this override is used, it affects only the current cell, and the global parameters are reestablished when processing in the current cell is completed.

One of the advantages that Text Cells provide over the current text formatting concepts is that a Text Cell can have presentation attributes which are independent of the attributes of the text presented therein, and which govern presentation characteristics not usually associated with text presentation. For example, each Text Cell may have an outline attribute, a shading attribute, and a colour attribute. The outline attribute governs the line type, line thickness, dimension and colour of the boundary of the Text Cell. The shading attribute governs the pattern which fills the cell. That is, the area of the Text Cell may be filled with a specific shading pattern. The colour attribute governs the background colour of the Text Cell area. That is, the area of the Text Cell is filled with the specified colour.

Text Cells also provide advantages over the present text formatting techniques, because multiple text cells can be specified on a presentation page, and the relationship of individual Text Cells to other Text Cells on the presentation page can be described.

In order that the invention may be fully understood a preferred embodiment thereof will now be described, by way of example only, with reference to the accompanying drawings in which:-
Fig. 1 shows a plurality of examples of individual text cells and the border choices available therewith.
Fig. 2 shows a chain of text cells.
Fig. 3 shows an example of the automatic height adjustment parameter associated with text cells within a chain.
Fig. 4 shows the alignment of the leading edges of text cell chains within a group.
Fig. 5 shows the alignment of the top edges of text cell chains within a group.
Fig. 6 is a flow diagram of the text cell processing routine.
Fig. 7 is a flow diagram of the Open Text Cell command routine.
Fig. 8 is a flow diagram of the Set-Up for Text Cell Processing routine.
Fig. 9 is a flow diagram of the Current Cell Process routine.
Fig. 10 is a flow diagram of the Adjust Cell Area routine.
Fig. 11 is a flow diagram of the Set-Up for Next Chain routine.
Fig. 12 is a flow diagram of the Position Cells routine.
Fig. 13 is a flow diagram of the Draw Cells routine.

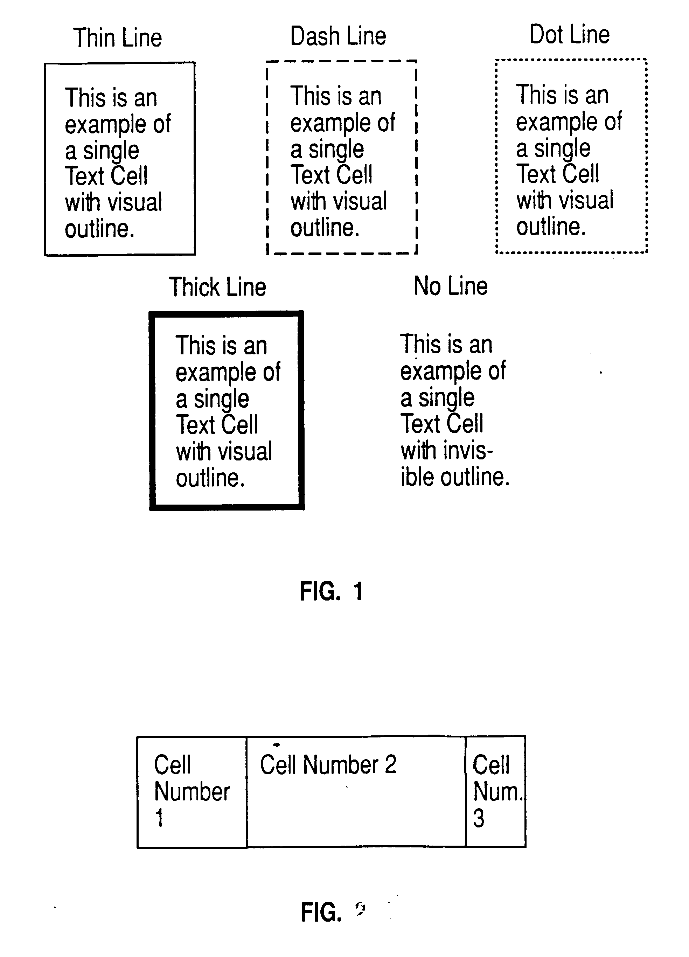

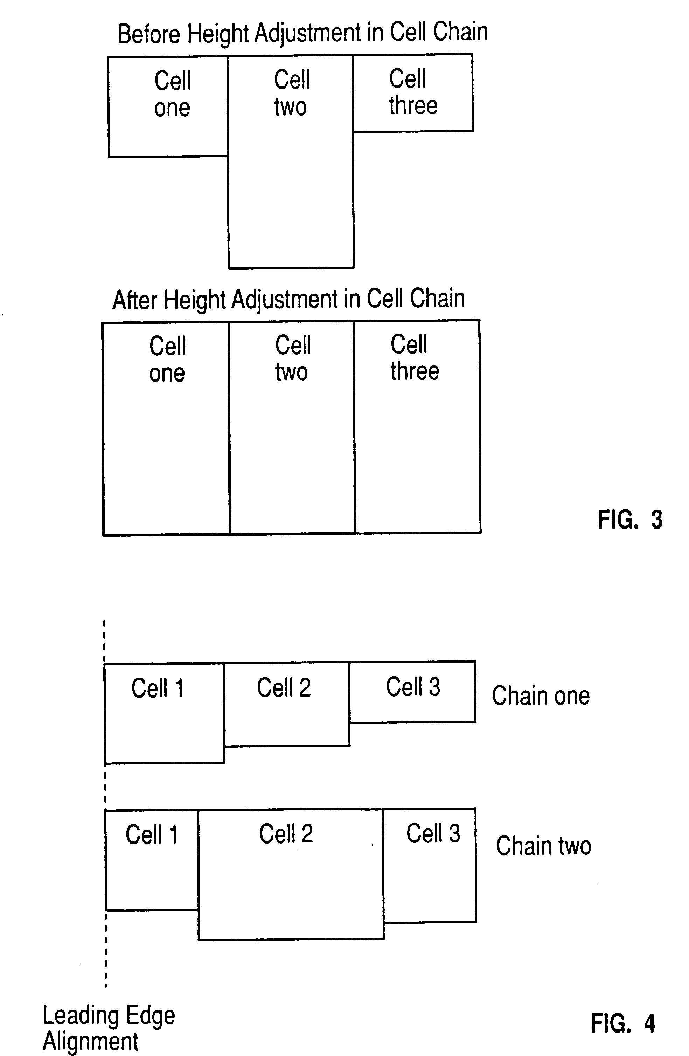

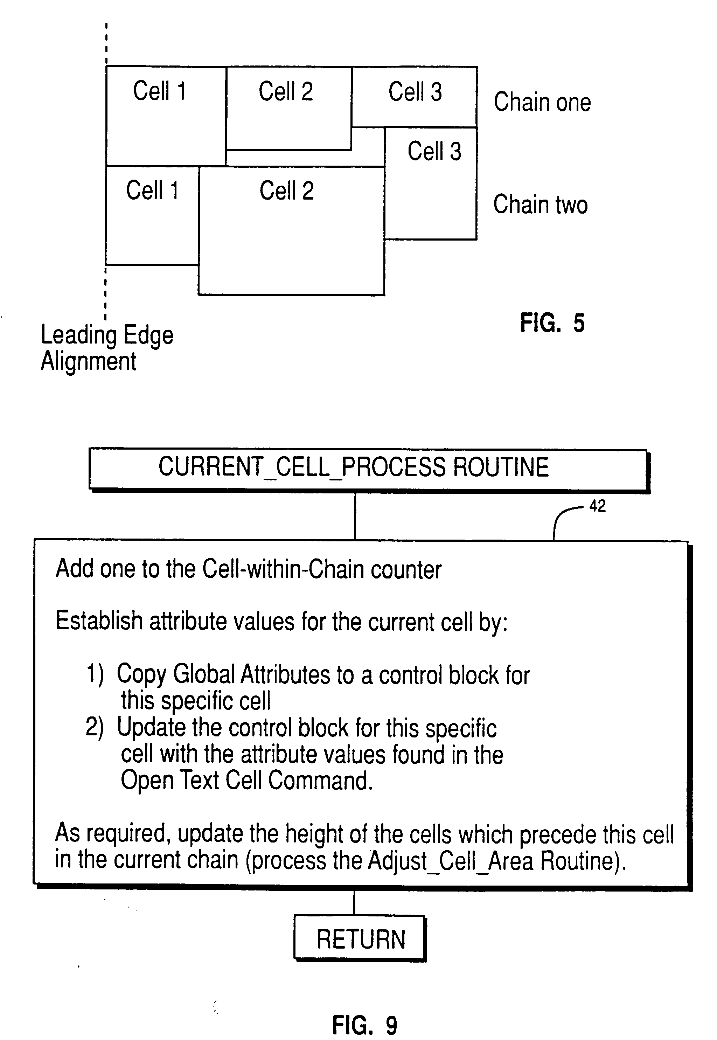

An individual Text Cell or cell is the smallest entity of a parallelogram which defines an area into which text or other such presentation data can be formatted for presentation. Fig. 1 shows a plurality of examples of individual text cells and a number of border choices available therewith. The border choices shown are: thin line border; dashed line border; dotted line border; thick line border; and invisible (no line) border. A row of horizontally contiguous cells may be concatenated into a Chain of cells. A chain of cells is shown in Fig. 2. Figure 3 shows a chain of cells before and after automatic height adjustment. Chains of cells may be concatenated into a Group of cells. Figure 4 shows a group of two chains of cells. The leading edges of the chains are aligned with an imaginary line. Figure 5 shows a group of two further chains of cells. In this example the top edges of the text cells are also aligned. In this description, each cell should be thought of as belonging to both a chain and a group although that cell may be the only cell in the chain and the chain in which that cell is the only member may be the only chain in the group.

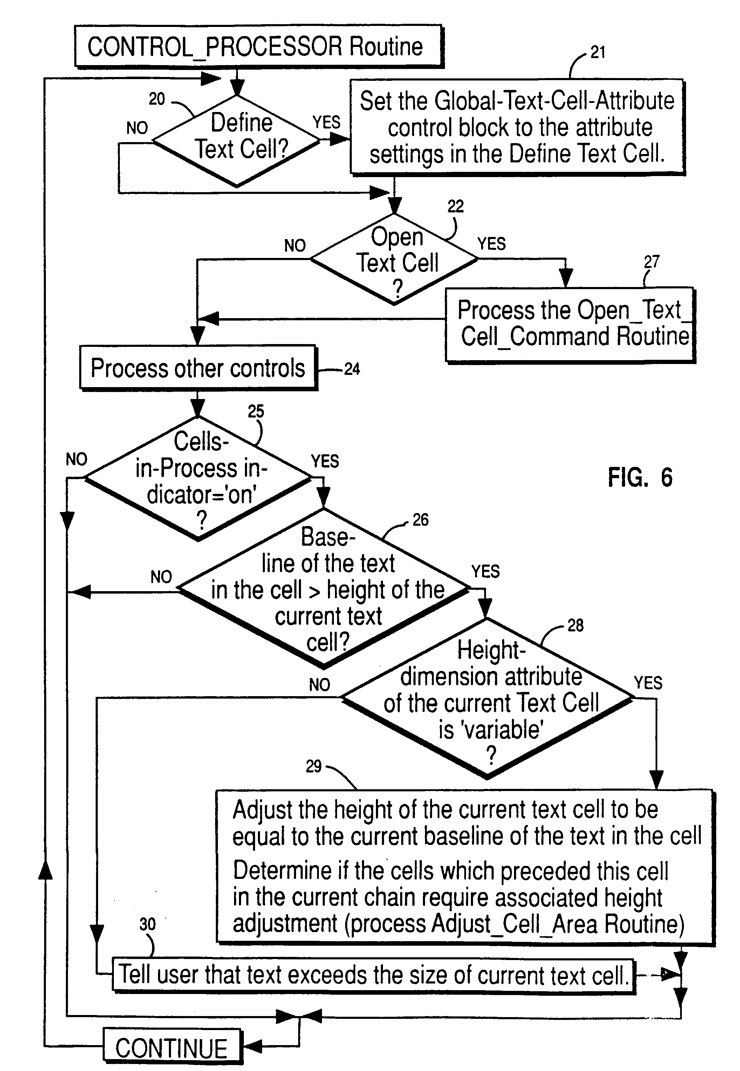

Fig. 6 is the first flow diagram of the text cell processing routine. In Fig. 6, a control processor routine, which has access to an output data stream, tests each code of the data stream for codes pertinent to text cells. At 20 a currently addressed code in the data stream is tested for a Define Text Cell (DTC) command code. Assuming that the code currently being tested is not a DTC command, at 22 this code is tested to determine if it is an Open Text Cell (OTC) command code. If this code is not an OTC command, at 24 the operation proceeds to process other control codes in the data stream. During this operation, if at 25 a Cells-in-Process indicator is turned on, the operation proceeds to 26, as described below. If at 25 the Cells-in-Process indicator is not on, the operation continues by looping back to 20, at which time the next code in the data stream is tested.

Assume now that an DTC command is detected at 20. At 21 a Global-Text-Cell-Attribute control block is set to the particular attribute settings that are a part of the DTC command. As described above, although individual cells within a chain of cells can have attributes different from these default attribute settings of the cells of this chain, these will be the default attributes to define the characteristics of the text cells within this chain, including the type of border to be used around the cells (if any), the background shading and colour of the cells (if any), and whether or not the lengths of the cells are variable or fixed. The operation then proceeds to 22 and, since the current code is a DTC command, this code is not an OTC command and the operation proceeds to 24 and continues as described above.

Again, note that the DTC command does not actually establish a text cell. The DTC command establishes default values for the attributes of the next chain of text cells that is opened, although these values of are simply default values and may be changed for each text cell at the time an OTC command is created.

The following programming design language listing is another form of the description of the above control processor routine. This listing parallels the operation described above for Fig. 6.

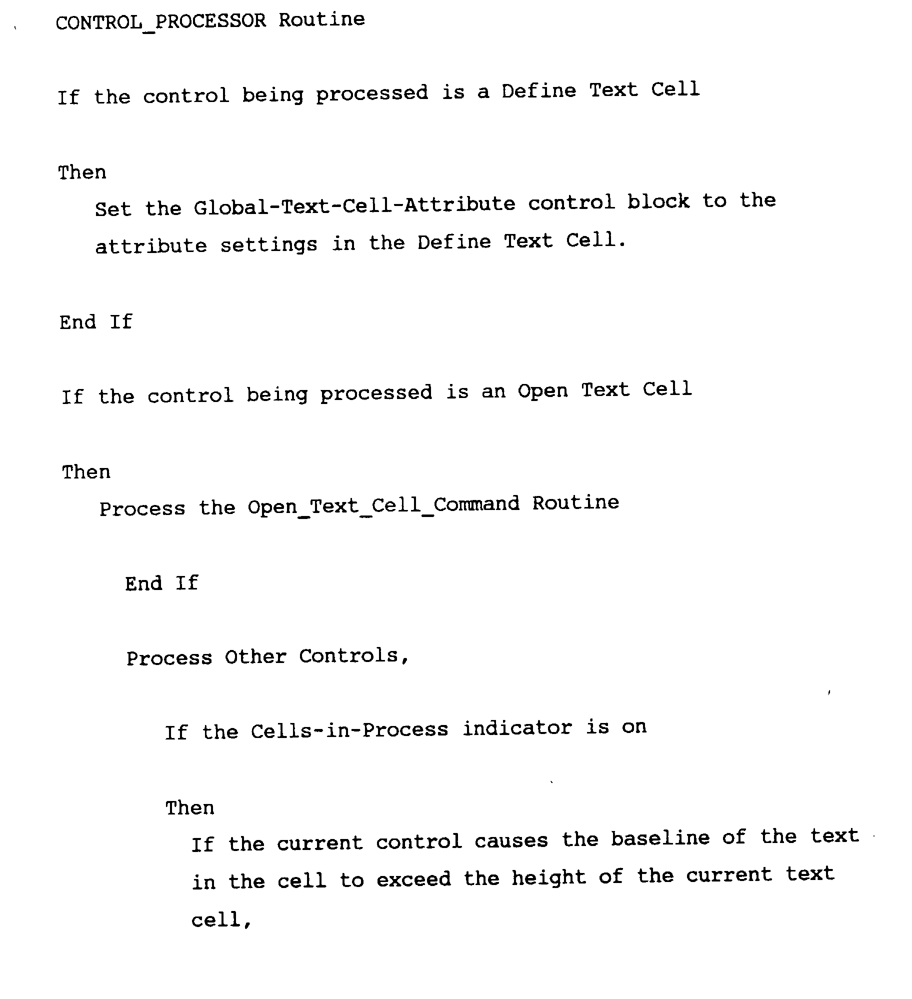

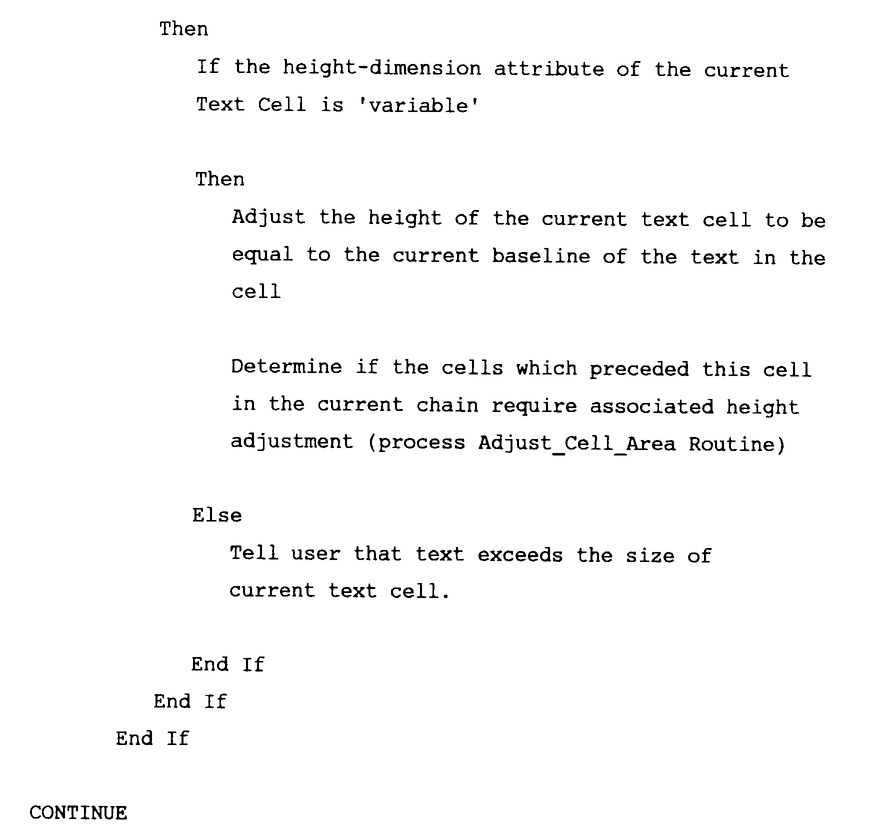

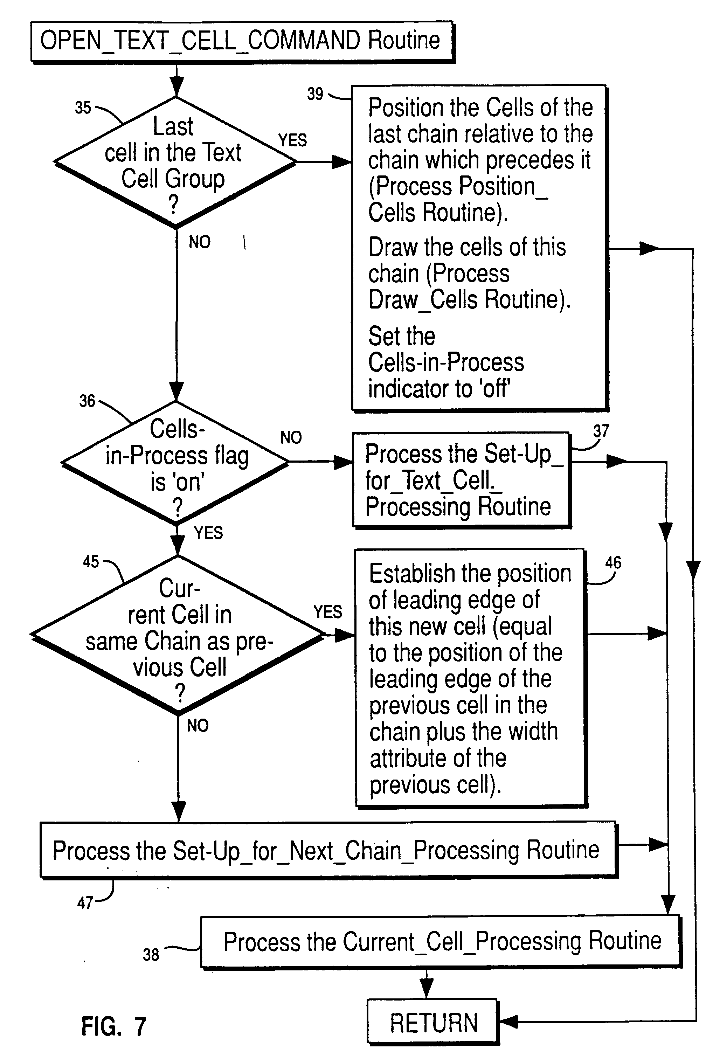

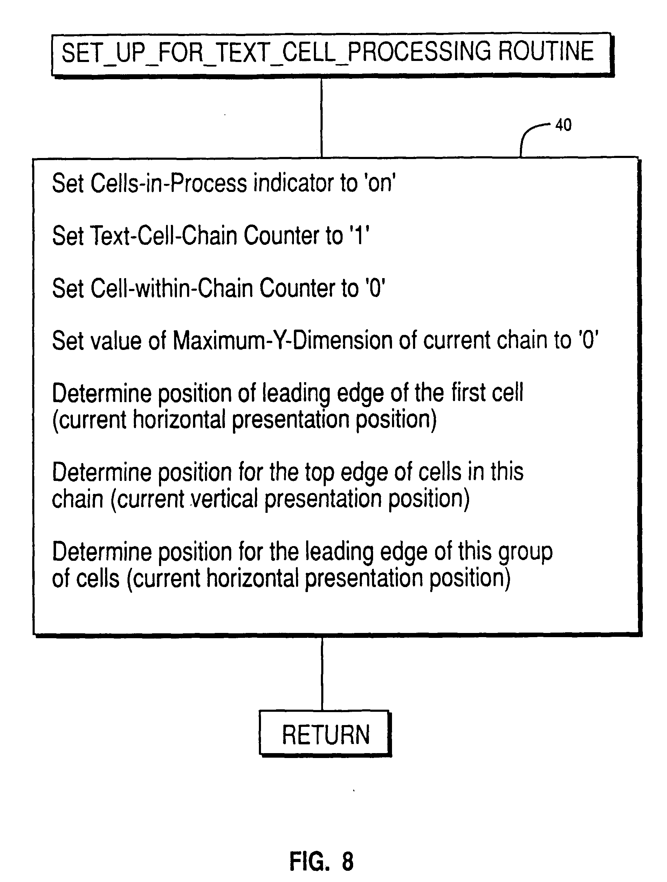

For an OTC command, a branch is taken to the Open Text Cell Command routine in Fig. 7. In Fig. 7, at 35 a test is made to determine if the OTC command is to open the last text cell in a text cell group. The OTC command includes an attribute which may be used to terminate a group rather than to open another text cell; therefore, this test is made to determine if the currently addressed OTC command indicates that the cell about to be opened is the last cell in the group. Assuming that the text cell about to be processed is not the last text cell in a group, the operation proceeds to 36 wherein a test is made to determine if a Cells-in-Process flag is on. Assume now that this is the first text cell in a group; therefore, the Cells-in-Process flag is not on. At 37 the Set-Up for Text Cell Processing routine is called, which routine is shown in detail in Fig. 8.

Referring now to Fig. 8, in the Set-Up for Text Cell Processing routine, the Cells-in-Process indicator is set to on. A Text Cell Chain counter is set to one. A Cell within Chain counter is set to zero. The value of the maximum current dimension of the current chain is initialized to zero. A position of the leading edge of the first cell, which is the current horizontal presentation position, is determined. A position for the top edge of cells in this chain, which is the current vertical presentation position, is determined. A position for the leading edge of this group of cells is determined, which is the current horizontal presentation position for printing or other display of data in the data stream. Since this is the first cell of the group, the leading edge of the first cell will match the leading edge of the group.

The following programming design language listing is another form of the description of the above Set-Up for Text Cell Processing routine. This listing parallels the operation described above for Fig. 8.
SET_UP_FOR_TEXT_CELL_PROCESSING ROUTINE
Set Cells-in-Process indicator to 'on'
Set Text-Cell-Chain Counter to '1'
Set Cell-within-Chain Counter to '0'
Set value of Maximum-Y-Dimension of current chain to '0'
Determine position of leading edge of the first cell (current horizontal presentation position)
Determine position for the top edge of cells in this chain (current vertical presentation position)
Determine position for the leading edge of this group of cells (current horizontal presentation position)

### RETURN

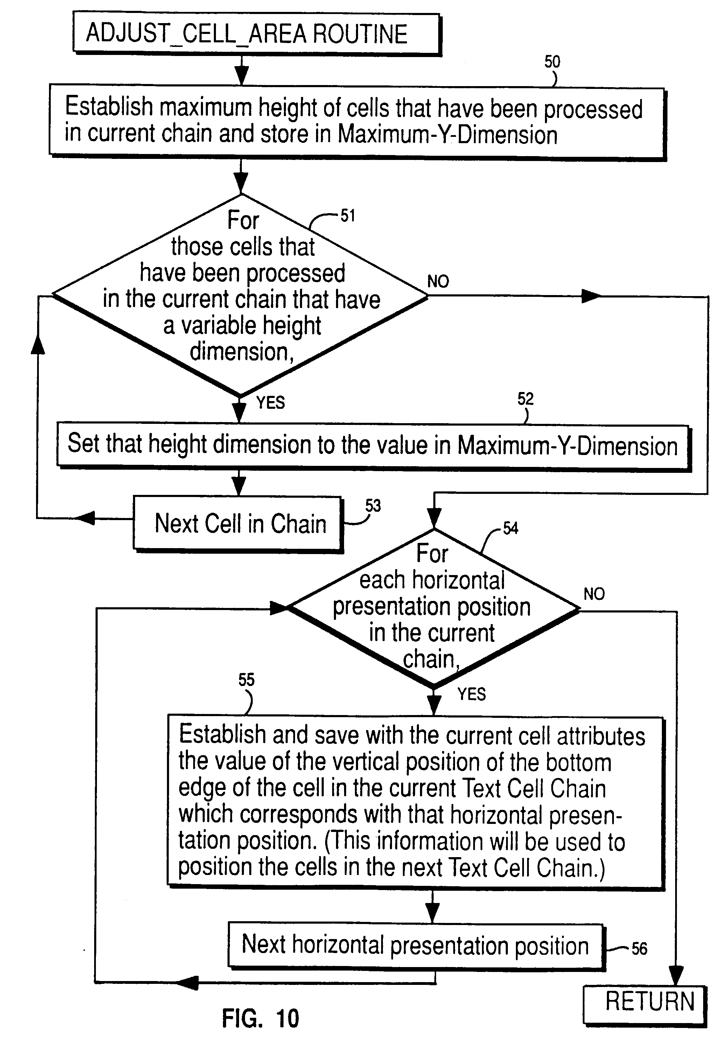

After these initializing operations have taken place, the operation returns to Fig. 7. In Fig. 7, at 38 the Current Cell Processing routine is called which routine is shown in detail in Fig. 9. Referring now to Fig. 9, the Cell within Chain counter is incremented. Next, attribute values for the current cell are established in a two step process which consists of first copying the global attributes (from Fig. 6, block 21) to a control block for this specific cell and, second, updating this control block for this specific cell with any attribute values found in the OTC command. Thus, the OTC command can include attribute values which take precedence over the previously set global attributes in order to personalize particular text cells. Since this is the first text cell in the chain, it is not necessary, at this time, to process the final operation of updating the height of the cells which precede the current cell, as indicated at 42. That process will be described below when applicable.

At the conclusion of the operations in 42, the process returns to the end of Fig. 7 which brings the operation back to the beginning of Fig. 6, at which time the next code in the data stream is tested at 20 to determine if it is a DTC command. Assuming that it is not, at 22 the code is tested to determine if it is an OTC command. Assuming that it is not, at 24 the process continues for other codes and controls in the data stream. If text or other presentation material is to be included in the text cell which has just been opened, that text or other presentation material is printed, displayed, sent to an output device, or saved in a file being accumulated for later output of presentation material.

After processing this control or data code, at 25 a test is made to determine if the Cells-in-Process indicator is on. In this example, it was turned on at 40 in Fig. 8. At 26 a test is made to determine if the base line of the text in the cell is greater than the height of the current text cell. The height of the current text cell is originally set by the OTC command and is kept in the attribute control block for the current text cell. If not, the operation continues back to 20 wherein the next control may be processed. If so, at 28 a test is made to determine if the height dimension attribute of the current text cell is "variable", another attribute of the current text cell. If not, at 30 the user is notified that the text exceeds the size allowable for the current text cell. However, if the height dimension of the current text cell is "variable", from 28 the operation proceeds to 29 at which time the height of the current text cell is adjusted to be equal to the current base line of the text in the cell. In 29, after this adjustment, a test is made to determine if there are other cells which preceded this cell in the current chain of cells which require associated height adjustment. This would be true if attributes were set in the previous cells which required adjustments of the previous cells' vertical dimensions to equal that of the cell in the chain having the greatest vertical dimension. The operation thereafter loops back to 20 to test the next code in the data stream.

Assume now that an OTC command is encountered to define a text cell which is not the first text cell in a chain. In Fig. 7, assume at 35 that the text cell to be opened is, likewise, not the last text cell in a group. At 36 the Cells-in-Process flag is on so the operation proceeds to 45 wherein a test is made to determine if the current cell to be opened is in the same chain as the previous cell. Assuming that it is, at 46 the position of the leading edge of this new cell is established. This position is equal to the position of the leading edge of the previous cell in the chain plus the width attribute of that previous cell. Next, at 38 the Current Cell Processing routine of Fig. 9 is again called.

The following programming design language listing is another form of the description of the above Open Text Cell Command routine. This listing parallels the operation described above for Fig. 7.

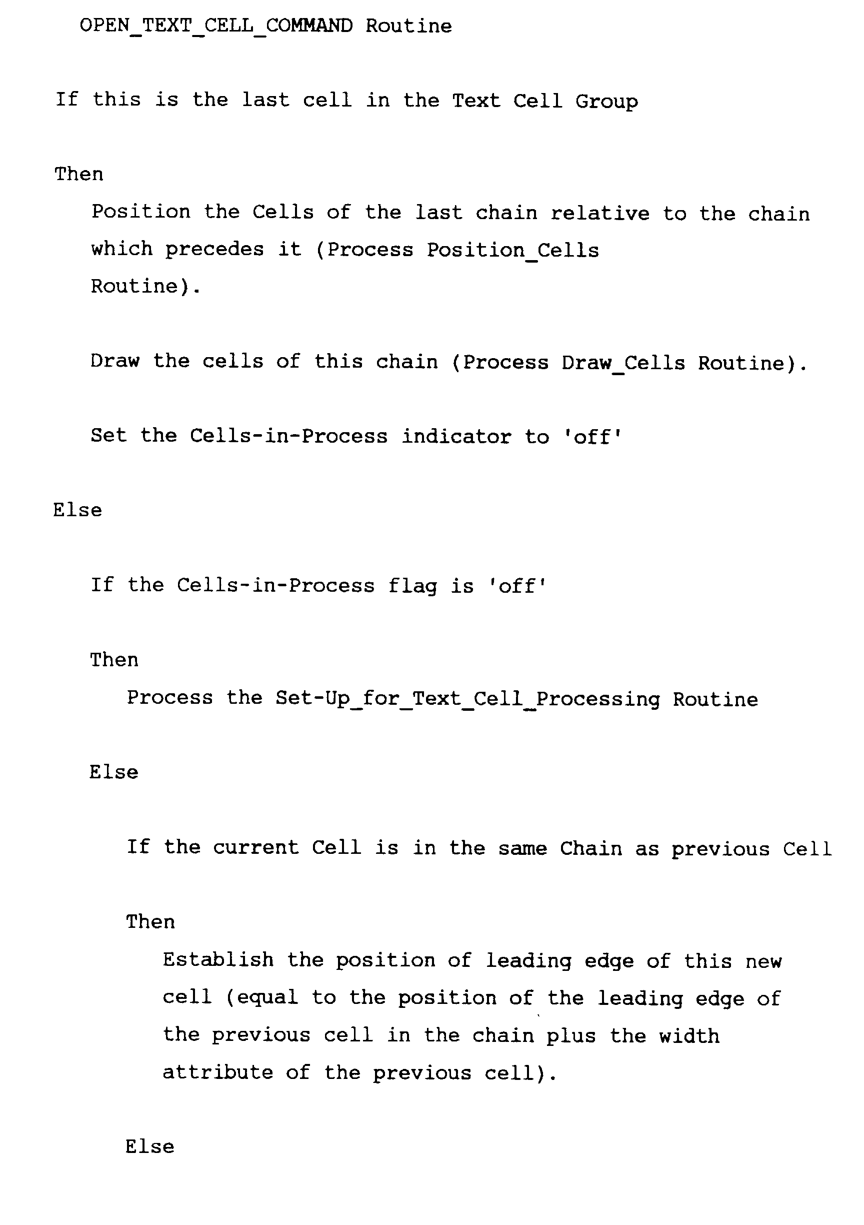

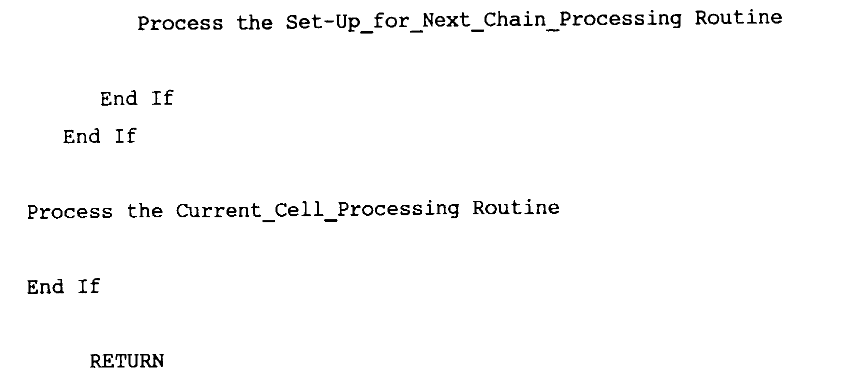

In Fig. 9, at 42 the operations previously described above are again carried out. Additionally, if previous cells in this chain included the attribute setting to have their heights adjusted to equal the height of the tallest cell in the chain, then, as required, the height of the cells which precede this current cell are updated to match the height of the tallest cell in the chain. This operation employs the Adjust Cell Area routine which is shown in detail in Fig. 10.

The following programming design language listing is another form of the description of the above Current Cell Process routine. This listing parallels the operation described above for Fig. 9.
CURRENT_CELL_PROCESS ROUTINE
Add one to the Cell-within-Chain counter
Establish attribute values for the current cell by:
1) Copy Global Attributes to a control block for this specific cell
2) Update the control block for this specific cell with the attribute values found in the Open Text Cell Command.
As required, update the height of the cells which proceed this cell in the current chain (process the Adjust Cell Area Routine).

### RETURN

Referring now to Fig. 10, at 50 a determination is made of the maximum height of cells that have been processed in the current chain. This maximum height is stored as the Maximum Y Dimension. At 51, if cells have been processed in the current chain which have a variable height dimension, the operation proceeds to 52 at which time the height dimension of those previous cells having a variable height dimension is set to the Maximum Y Dimension defined at 50. At 53 the next cell in the chain is checked in accordance with the test of 51 so that all cells in the chain having a variable height dimension end up having their height dimensions set to the Maximum Y Dimension. Thereafter, the operation proceeds to 54 wherein, for each horizontal presentation position the vertical position determined in block 55 is established and saved. This vertical position value that is established and saved for each horizontal presentation position is the value of the vertical position of the bottom edge of the cell with which that horizontal presentation position is associated. This vertical position is saved with the attributes associated with the current text cell. The information will be used later to position cells and the next succeeding text cell chain, should such a text succeeding chain be established. The operation then proceeds to 56 which loops back to 54 for the operation of 55 to be repeated for each succeeding horizontal presentation position in the current chain of text cells. At the conclusion of this process the operation returns to the bottom of Fig. 9 which returns to the bottom of Fig. 7 which returns to the beginning of Fig. 6.

The following programming design language listing is another form of the description of the above Adjust Cell Area routine. This listing parallels the operation described above for Fig. 10.

### ADJUST_CELL_AREA ROUTINE

Establish maximum height of cells that have been processed in current chain and store in Maximum-Y-Dimension
For those cells that have been processed in the current chain that have a variable height dimension,
Set that height dimension to the value in
Maximum-Y-Dimension
Next Cell in Chain

For each horizontal presentation position in the current chain,
Establish and save with the current cell attributes the value of the vertical position of the bottom edge of the cell in the current Text Cell Chain which corresponds with with that horizontal presentation position. (This information will be used to position the cells in the next Text Cell Chain.)

Next horizontal presentation position

### RETURN

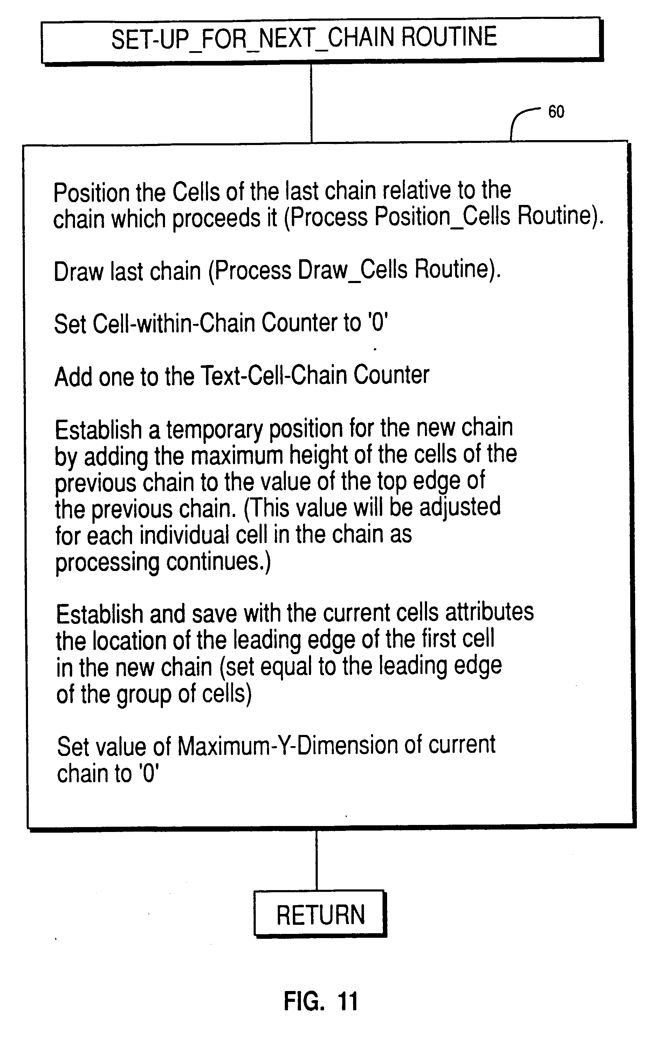

Assume now in Fig. 6 that another OTC command is encountered. In Fig. 7, assume that at 45 the OTC command indicates that the cell to be opened is not in the same chain as was the previous cell. In this case the operation proceeds to 47 which calls the Set-Up for Next Chain Processing routine that is shown in detail in Fig. 11.

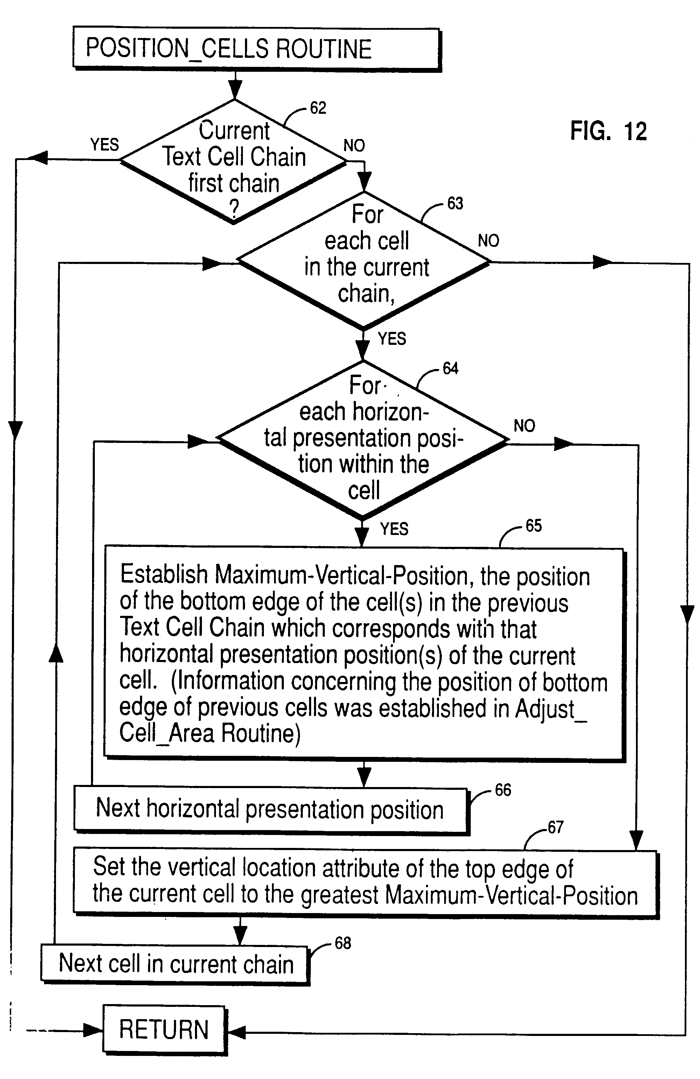

At 60 in Fig. 11, the cells of the last chain in the group (which is the current chain being processed) are positioned relatively to the chain which precedes this chain. This is accomplished by the position cells routine of Fig. 12.

Referring now to Fig. 12, at 62 a test is made to determine if the current text cell chain is the first chain. If it is, the operation returns since there are no previous text cell chains with which to position the current text cell chain. Assuming that the current text cell chain is not the first chain, at 63 for each cell in the current chain an iterative or looping process is begun. Continuing to 64 another iterative or looping process is begun within the process begun at 63. At 64 for each horizontal presentation position within the cell a Maximum Vertical Position (MVP) is established at 65. The MVP is the position of the bottom edge of the cell or cells in the previous text cell chain which corresponds to the horizontal presentation position or positions of the current text cell. Information concerning the position of the bottom edge of previous cells was established in the Adjust Cell Area routine of Fig. 10. At 66 the operation loops back to 64 to establish the MVP for the next horizontal presentation position within the text cell. When all MVPs have been established within this cell, the operation proceeds to 67 to set the vertical location attribute of the top edge of the current cell to the greatest MVP. Then, at 68 this process is repeated for each succeeding cell in the current chain. When all cells of the current chain have been processed, the operation returns to 60 in Fig. 11.

The following programming design language listing is another form of the description of the above Position Cells routine. This listing parallels the operation described above for Fig. 12.

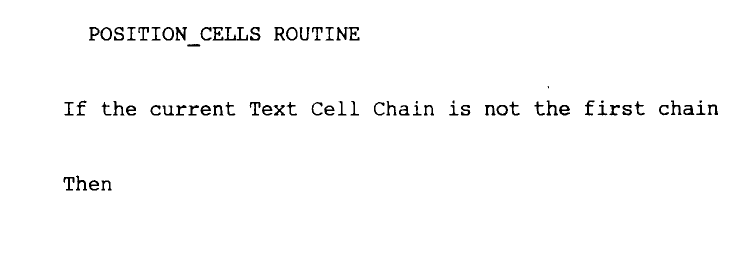

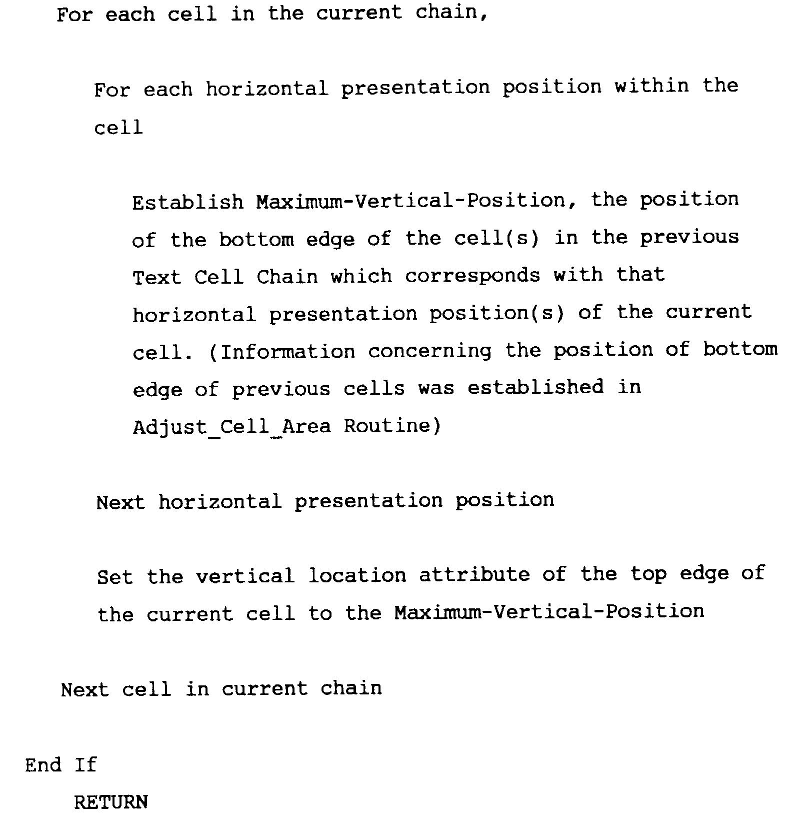

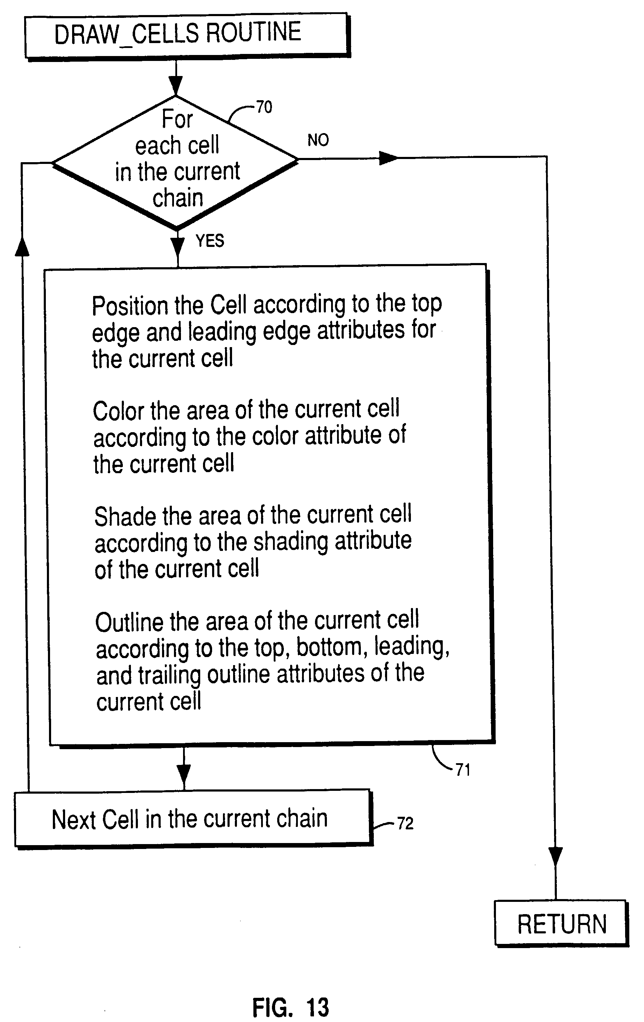

The next step in the Set-Up for Next Chain routine 60, Fig. 11 is to draw the last or current chain. This step calls the Draw Cells routine of Fig. 13.

Referring now to Fig. 13 at 70 looping or iterative process is entered for each cell in the current chain. The steps of this process are shown at 71. First, the cell is positioned according to the top edge and leading edge attributes for the cell as previously established. Next, the area of the cell is colored according to the colour attribute for the cell. Thereafter, the area of the cell is shaded according to the shading attribute for the cell. Finally, the area of the current cell is outlined according to the top, bottom, leading, and trailing outline attributes of this cell. At 72 the operation proceeds back to 70 for the drawing for each of the succeeding cells in the current chain.

The following programming design language listing is another form of the description of the above Draw Cells routine. This listing parallels the operation described above for Fig. 13.

### DRAW_CELLS ROUTINE

For each cell in the current chain
Position the cell according to the top edge and leading edge attributes for the current cell
Colour the area of the current cell according to the colour attribute of the current cell
Shade the area of the current cell according to the shading attribute of the current cell
Outline the area of the current cell according to the top, bottom, leading, and trailing outline attributes of the current cell
Next cell in current chain

### RETURN

The following programming design language listing is another form of the description of the above Set-Up for Next Chain routine. This listing parallels the operation described above for Fig. 11.
SET-UP_FOR_NEXT_CHAIN ROUTINE
Position the Cells of the last chain relative to the chain which proceeds it (Process Position_Cells Routine).
Draw last chain (Process Draw_Cells Routine).
Set Cell-within-Chain Counter to '0'
Add one to the Text-Cell-Chain Counter
Establish a temporary position for the new chain by adding the maximum height of the cells of the previous chain to the value of the top edge of the previous chain. (This value will be adjusted for each individual cell in the chain as processing continues.)
Establish and save with the current cells attributes the location of the leading edge of the first cell in the new chain (set equal to the leading edge of the group of cells)
Set value of Maximum-Y-Dimension of current chain to '0'

### RETURN

Returning to Fig. 7, at 35 if the OTC command is associated with the last cell in the text cell group, at 39 the cells of the last chain are positioned relative to the chain which precedes the last chain (Position Cells Routine, Fig. 12). Next, the cells of this last chain are drawn (Draw Cells Routine, Fig. 13). Finally, the Cells-in-Process indicator is set to off and the operation returns.

In summary a technique is provided for defining Text Cells into which text data can be formatted for presentation. The Text Cell defines the boundaries for the text presentation. Well known and understood text formatting concepts such as margins, tabs, line density, etc., can be applied to the text as it is formatted into the Text Cell.

The definition of Text Cells, including the Text Cell Attributes, the location and text content of the cells, the clustering of the cells into sets and the chaining of cells is controlled by two data stream commands which are the Define Text Cell, and Open Text Cell.

The Define Text Cell command specifies the parameters associated with a Text Cell Chain. The Define Text Cell includes a set of global parameters to be applied to each Text Cell to be presented following the issuance of this command. These parameters may be overridden for each individual Text Cell, but once that individual Text Cell is presented, all parameters revert back to the values specified in this command.

The Open Text Cell command causes an individual Text Cell to be established. That is, the area associated with the Text Cell is opened, the presentation parameters for the cell are set, and the text information which follows this current Open Text Cell, but precedes a subsequent Open Text Cell, is processed into this area. Each Text Cell within a Text Cell Chain begins with an Open Text Cell. The Open Text cell contains a 'Chain ID" that defines the Text Cell chain within a Text Cell Group to which the current cell belongs.

Each open Text cell contains a group of optional parameters. These parameters may be used to override the global Text Cell parameters specified in the Define Text Cell command for the processing of this specific Text Cell. If this override is used, it affects only the current cell, and the global parameters are reestablished when processing in the current cell is completed.

Text Cells can have presentation attributes which are independent of the attributes of the text presented therein, and which govern presentation characteristics not usually associated with text presentation. For example, each Text Cell may have an outline attribute, a shading attribute, and a colour attribute. The outline attribute governs the line type, line thickness, dimension and colour of the boundary of the Text Cell. The shading attribute governs the Pattern which fills the cell. That is, the area of the Text Cell may be filled with a specific shading Pattern. The colour attribute governs the background colour of the Text Cell area. That is, the area of the Text Cell is filled with the specified colour. Additionally, multiple text cells can be specified on a presentation page, and the relationship of individual Text Cells to other Text Cells on the presentation page can be described.

## Claims

1. A method of automatically formatting text for display in a data processing system comprising the steps of:
in response to user commands dividing a display area into a group of substantially rectangular text cells arranged in a plurality of horizontally extending chains vertically offset from each other so that, as far as possible, each text cell in the group butts against its neighbouring cells;
and independently automatically formatting respective portions of text from a user generated data stream into said text cells; characterized by the further automatic steps of:-
building (21, 27) control blocks for each text cell in response (20, 22) to user-entered control commands in said data stream, the control blocks including boundary defining attributes for their respective cells;
determining (46, 65) a horizontal and vertical position for each cell, the positions of successive cells in a chain being calculated with reference to the boundary attributes of neighbouring cells;
determining (26), for cells having a variable height attribute, the required height of each such cell in relation to the text to be formatted and adjusting (29) said height attribute to accommodate said text; and
adjusting (29), if necessary, the height attributes of other variable height cells in the same chain to be equal to said adjusted height attribute.

2. A method as claimed in claim 1 wherein the determination of cell positions includes the successive steps of
establishing (60) a temporary vertical position for each chain of cells;
establishing (46) the horizontal position of each cell in the chain; and
establishing (65) the final vertical position of each cell in the chain.

3. A method as claimed in claim 2 in which the step of establishing the final vertical position of each cell in a chain is carried out in response to an indication in a control command that the current text cell is the first in a new chain (45) or the last in the group (35).

4. A method as claimed in either claim 2 or claim 3 in which said temporary vertical position for a new chain of cells other than the first such chain is established (60) by reference to the position of the top edge of the immediately previous chain and the maximum height of the cells in said previous chain.

5. A method as claimed in claim 4 including the further step of automatically establishing (65), for each horizontal position of a cell, the vertical position of the bottom edge of any cell in the corresponding horizontal position in the previous chain, in order to determine the maximum vertical position for the top edge of the current cell; and
automatically setting (67) a top edge vertical location attribute in the control block of that cell accordingly.

6. A method as claimed in any preceding claim in which said step of building control blocks for each text cell includes the steps of
setting (21) default attributes for subsequent cells in response to detection (20) of a Defined Text Cell control command in said data streams;
building control blocks for respective text cells in response to detection (22) of Open Text Cell commands in said data streams; and
setting the attributes for the respective text cells to be the default attributes updated by attributes contained in the Open Text Cell commands.

7. A method as claimed in any preceding claim wherein said control blocks also include presentation attributes for respective cells, said presentation and boundary defining attributes being derived from said control commands.

8. A method as claimed in claim 7 in which said presentation attributes include colouring, shading or outlining information for said text cells.

9. A data processing system wherein text may be formatted automatically for display comprising
means responsive to user commands for dividing a display area into a group of substantially rectangular text cells arranged in a plurality of horizontally extending chains vertically offset from each other so that, as far as possible, each text cell in the group butts against its neighbouring cells;
and means for independently automatically formatting respective portions of text from a user generated data stream into said text cells; characterized by
means for building (21, 27) control blocks for each text cell in response (20, 22) to user-entered control commands in said data stream, the control blocks including boundary defining attributes for their respective cells;
means for determining (46, 65) a horizontal and vertical position for each cell, the positions of successive cells in a chain being calculated with reference to the boundary attributes of neighbouring cells;
means for determining (26), for cells having a variable height attribute, the required height of each such cell in relation to the text to be formatted and adjusting (29) said height attribute to accommodate said text; and
means for adjusting (29), if necessary, the height attributes of other variable height cells in the same chain to be equal to said adjusted height attribute.

10. A system as claimed in claim 9 wherein the means for determining cell positions includes
means for establishing (60) a temporary vertical position for each chain of cells;
means for establishing (46) the horizontal position of each cell in the chain; and
means for establishing (65) the final vertical position of each cell in the chain.

## Patentansprüche

1. Verfahren zur automatischen Formatierung von Text zur Anzeige in einem Datenverarbeitungssystem, das die folgenden Schritte umfaßt:
als Antwort auf Benutzerbefehle Aufteilen eines Anzeigebereichs in eine Gruppe von weitgehend rechteckigen Textzellen, die in einer Vielzahl von sich waagerecht erstrekkenden Ketten angeordnet sind, welche senkrecht gegeneinander versetzt sind, so daß jede Textzelle in der Gruppe, soweit möglich, an ihre Nachbarzellen grenzt;
und automatisches, unabhängiges Formatieren von entsprechenden Textteilen aus einem von einem Benutzer erzeugten Datenstrom in die Textzellen; durch die weiteren automatischen Schritte gekennzeichnet:
Aufbauen (21, 27) von Steuerblöcken für jede Textzelle als Antwort (20, 22) auf vom Benutzer in den Datenstrom eingegebene Steuerbefehle, wobei die Steuerblöcke Grenzen festlegende Attribute für ihre jeweiligen Zellen enthalten;
Bestimmen (46, 65) einer waagerechten und einer senkrechten Position für jede Zelle, wobei die Positionen von aufeinanderfolgenden Zellen in einer Kette mit Bezug auf die Grenzattribute von Nachbarzellen berechnet werden;
für Zellen, die ein Attribut "variable Höhe" haben, Festlegen (26) der erforderlichen Höhe einer jeden solchen Zelle in bezug auf den zu formatierenden Text und Einstellen (29) des Höhenattributs, um den Text aufzunehmen; und
bei Bedarf Einstellen (29) der Höhenattribute von anderen Zellen variabler Höhe in derselben Kette, so daß sie gleich dem eingestellten Höhenattribut sind.

2. Verfahren wie in Anspruch 1 beansprucht, wobei die Bestimmung von Zellpositionen die aufeinanderfolgenden Schritte
der Festlegung (60) einer vorübergehenden senkrechten Position für jede Kette von Zellen;
der Festlegung (46) der waagerechten Position einer jeden Zelle in der Kette; und
der Festlegung (65) der endgültigen senkrechten Position einer jeden Zelle in der Kette einschließt.

3. Verfahren wie in Anspruch 2 beansprucht, bei dem der Schritt der Festlegung der endgültigen senkrechten Position einer jeden Zelle in einer Kette als Antwort auf einen Hinweis in einem Steuerbefehl, daß die aktuelle Textzelle die erste in einer neuen Kette (45) oder die letzte in der Gruppe (35) ist, durchgeführt wird.

4. Verfahren wie in Anspruch 2 oder Anspruch 3 beansprucht, bei dem die vorübergehende senkrechte Position für eine neue Kette von Zellen, bei der es sich um eine andere als die erste solche Kette handelt, durch Bezugnahme auf die Position der Oberkante der unmittelbar vorausgehenden Kette und der maximalen Höhe der Zellen in der vorausgehenden Kette festgelegt (60) wird.

5. Verfahren wie in Anspruch 4 beansprucht, das für jede waagerechte Position einer Zelle die weiteren Schritte
der automatischen Festlegung (65) der senkrechten Position der Unterkante einer beliebigen Zelle in der entsprechenden waagerechten Position in der vorausgehenden Kette zur Bestimmung der maximalen senkrechten Position für die Oberkante der aktuellen Zelle; und
des automatischen dementsprechenden Setzens (67) eines Attributs für die Oberkante der senkrechten Position im Steuerblock dieser Zelle einschließt.

6. Verfahren wie in einem vorhergehenden Anspruch beansprucht, bei dem der Schritt des Aufbaus von Steuerblöcken für jede Textzelle die Schritte
des Setzens (21) von Standardattributen für nachfolgende Zellen als Antwort auf das Erkennen (20) eines Steuerbefehls "Definierte Textzelle" in den Datenströmen,
des Aufbaus von Steuerblöcken für entsprechende Textzellen als Antwort auf das Erkennen (22) von Befehlen "Textzelle öffnen" in den Datenströmen; und
des Setzens der Attribute für die entsprechenden Textzellen als Standardattribute, die von Attributen, welche in den Befehlen "Textzelle öffnen" enthalten sind, aktualisiert werden, einschließt.

7. Verfahren wie in einem vorhergehenden Anspruch beansprucht, bei dem die Steuerblöcke auch Darstellungsattribute für entsprechende Zellen enthalten, wobei die Darstellungsattribute und die Grenzen festlegenden Attribute von den Steuerbefehlen abgeleitet werden.

8. Verfahren wie in Anspruch 7 beansprucht, bei dem die Darstellungsattribute Farbgebungs-, Schattierungs- oder Umrandungsinformationen für die Textzellen enthalten.

9. Datenverarbeitungssystem, bei dem Text zur Anzeige automatisch formatiert werden kann, das folgendes enthält:
Mittel, die auf Benutzerbefehle ansprechen, um einen Anzeigebereich in eine Gruppe von weitgehend rechteckigen Textzellen aufzuteilen, die in einer Vielzahl von sich waagerecht erstreckenden Ketten angeordnet sind, welche senkrecht gegeneinander versetzt sind, so daß jede Textzelle in der Gruppe, soweit möglich, an ihre Nachbarzellen grenzt;
und Mittel, um entsprechende Textteile aus einem von einem Benutzer erzeugten Datenstrom automatisch und unabhängig voneinander in die Textzellen zu formatieren;
gekennzeichnet durch:
Mittel, um als Antwort (20, 22) auf vom Benutzer in den Datenstrom eingegebene Steuerbefehle Steuerblöcke für jede Textzelle zu erstellen (21, 27), wobei die Steuerblöcke Grenzen festlegende Attribute für ihre jeweiligen Zellen enthalten;
Mittel, um eine waagerechte und eine senkrechte Position für jede Zelle zu bestimmen (46, 65), wobei die Positionen von aufeinanderfolgenden Zellen in einer Kette mit Bezug auf die Grenzattribute von Nachbarzellen berechnet werden;
Mittel, um für Zellen mit einem Attribut "variable Höhe" die erforderliche Höhe einer jeden solchen Zelle in bezug auf den zu formatierenden Text zu bestimmen (26) und um das Höhenattribut zur Aufnahme des Texts einzustellen (29); und
Mittel, um die Höhenattribute anderer Zellen variabler Höhe in derselben Kette bei Bedarf so einzustellen, daß sie gleich dem eingestellten Höhenattribut sind.

10. System wie in Anspruch 9 beansprucht, bei dem das Mittel zur Bestimmung von Zellpositionen folgendes enthält:
Mittel, um eine vorübergehende senkrechte Position für jede Kette von Zellen festzulegen (60);
Mittel, um die waagerechte Position einer jeden Zelle in der Kette festzulegen (46); und
Mittel, um die endgültige senkrechte Position einer jeden Zelle in der Kette festzulegen (65).

## Revendications

1. Procédé pour formater automatiquement un texte pour affichage dans un système de traitement de données, comprenant les étapes de:
en réponse à des commandes d'utilisateur, diviser une zone d'affichage en un groupe de cellules de texte sensiblement rectangulaires agencées en une pluralité de chaînes s'étendant horizontalement décalées verticalement entre elles de sorte que, dans la mesure du possible, chaque cellule de texte dans le groupe vienne buter contre ses cellules avoisinantes;
et formater automatiquement indépendamment des portions respectives de texte à partir d'un flot de données engendrées par un utilisateur, en dites cellules de texte; caractérisé par les autres étapes automatiques de:
construire (21, 27) des blocs de contrôle pour chaque cellule de texte en réponse (20, 22) à des commandes de contrôle entrées par un utilisateur dans ledit flot de données, les blocs de contrôle comprenant des attributs de définition de limite pour leur cellule respective;
déterminer (46, 65) une position horizontale et verticale pour chaque cellule, les positions de cellules successives dans une chaîne étant calculées en référence aux attributs de limite de cellules avoisinantes;
déterminer (26), pour des cellules ayant un attribut de hauteur variable, la hauteur requise pour chacune de ces cellules par rapport au texte à formater et régler (29) ledit attribut de hauteur pour prendre en charge ledit texte; et
régler (29), si besoin est, les attributs de hauteur d'autres cellules de hauteur variable dans la même chaîne pour qu'ils soient égaux audit attribut de hauteur réglé.

2. Procédé selon la revendication 1, dans lequel la détermination de la position des cellules comprend les étapes successives de:
établir (60) une position verticale temporaire pour chaque chaîne de cellules;
établir (46) la position horizontale de chaque cellule dans la chaîne; et
établir (65) la position verticale finale de chaque cellule dans la chaîne.

3. Procédé selon la revendication 2, dans lequel l'étape d'établir la position verticale finale de chaque cellule dans une chaîne est effectuée en réponse à une indication dans une commande contrôle que la cellule de texte en cours est la première dans une nouvelle chaîne (45) ou la dernière dans le groupe (35).

4. Procédé selon l'une ou l'autre des revendications 2 et 3, dans lequel la position verticale temporaire d'une nouvelle chaîne de cellules autre que la première chaîne est établie (60) en référence à la position du bord supérieur de la chaîne immédiatement précédente et de la hauteur maximale des cellules dans ladite chaîne précédente.

5. Procédé selon la revendication 4, comprenant l'autre étape d'établir automatiquement (65), pour chaque position horizontale d'une cellule, la position verticale du bord inférieur de toute cellule dans la position horizontale correspondante dans la chaîne précédente, de manière à déterminer la position verticale maximale du bord supérieur de la cellule en cours; et
instaurer automatiquement (67), en conséquence, un attribut de position verticale de bord supérieur dans le bloc de contrôle de cette cellule.

6. Procédé selon l'une quelconque des revendications précédentes, dans lequel ladite étape de construire des blocs de contrôle pour chaque cellule de texte, comprend les étapes de:
instaurer (21) des attributs par défaut pour des cellules suivantes en réponse à la détection (20) d'une commande de contrôle Cellule de Texte Définie dans lesdits flots de données;
construire des blocs de contrôle pour des cellules de texte respectives en réponse à la détection (22) de commandes Cellule de Texte Ouverte dans lesdits flots de données; et
instaurer les attributs pour que les cellules de texte respectives soient les attributs par défaut mis à jour par des attributs contenus dans les commandes Cellule de Texte Ouverte.

7. Procédé selon l'une quelconque des revendications précédentes, dans lequel lesdits blocs de contrôles comprennent également des attributs de présentation de cellules respectives, lesdits attributs de définition de présentation et de limite étant dérivés desdites commandes de contrôle.

8. Procédé selon la revendication 7, dans lequel lesdits attributs de présentation sont des informations de couleur, d'ombre ou de contour desdites cellules de texte.

9. Système de traitement de données dans lequel du texte peut être formaté automatiquement pour affichage, comprenant:
des moyens sensibles à des commandes d'utilisateur pour diviser une zone d'affichage en un groupe de cellules de texte sensiblement rectangulaires agencées en une pluralité de chaînes s'étendant horizontalement décalées verticalement entre elles de sorte que, dans la mesure du possible, chaque cellule de texte dans le groupe vienne buter contre ses cellules avoisinantes;
et des moyens pour formater automatiquement indépendamment des portions respectives de texte à partir d'un flot de données engendré par un utilisateur, en dites cellules de texte:
caractérisé par:
des moyens pour construire (21, 27) des blocs de contrôle pour chaque cellule de texte en réponse (20, 22) à des commandes de contrôle entrées par un utilisateur dans ledit flot de données, les blocs de contrôle comprenant des attributs de définition de limite pour leur cellule respective;
des moyens pour déterminer (46, 65) une position horizontale et verticale pour chaque cellule, les positions de cellules successives dans une chaîne étant calculées en référence aux attributs de limite de cellules avoisinantes;
des moyens pour déterminer (26), pour des cellules ayant un attribut de hauteur variable, la hauteur requise pour chacune de ces cellules par rapport au texte à formater et pour régler (29) ledit attribut de hauteur pour prendre en charge ledit texte; et
des moyens pour régler (29), si besoin est, les attributs de hauteur d'autres cellules de hauteur variable dans la même chaîne pour qu'ils soient égaux audit attribut de hauteur réglé.

10. Système selon la revendication 9, dans lequel les moyens pour déterminer des positions de cellule comprennent:
des moyens pour établir (60) une position verticale temporaire pour chaque chaîne de cellules;
des moyens pour établir (46) la position horizontale de chaque cellule dans la chaîne; et
des moyens pour établir (65) la position verticale finale de chaque cellule dans la chaîne.
